# FASCICULE DE BREVET EUROPEEN

(11) **EP 3 220 498 B1**
(45) Date de publication et mention de la délivrance du brevet: **08.07.2020**
(21) Numéro de dépôt: 17158245.5
(22) Date de dépôt: 27.02.2017
(51) Int. Cl.: H02B 1/42, F16B 5/12, H02B 1/052, H02B 1/20, H02B 3/00, F16B 21/08, F16B 2/22

(54) **DISPOSITIF D'ATTACHE MONOBLOC POUR ARMOIRE ELECTRIQUE**
MONOBLOCK-ANSCHLUSSVORRICHTUNG FÜR SCHALTSCHRANK
ONE-PIECE FASTENING DEVICE FOR ELECTRICAL CABINET

(30) Priorité: 17.03.2016 FR 1652278
(43) Date de publication de la demande: 20.09.2017
(73) Titulaire: Legrand France, 87000 Limoges (FR); Legrand SNC, 87000 Limoges (FR)
(72) Inventeur: BAUDOU, Alain, 87000 LIMOGES (FR)
(74) Mandataire: Novagraaf Technologies

(56) Documents cités:
- EP-A1- 0 762 585
- DE-A1- 10 112 119
- FR-A1- 2 633 988
- FR-A5- 2 211 993

## Description

L'invention se rapporte à un dispositif d'attache monobloc pour armoire électrique, et particulièrement pour les enveloppes de coffrets de prises industrielles, permettant de fixer un rail comprenant des appareils de protection modulaires à un élément socle. L'invention a également pour objet un boiter électrique comprenant plusieurs de ces dispositifs d'attaches.

### État de la technique

Les enveloppes de coffrets de prises industrielles comprennent de manière générale deux éléments distincts : un élément socle qui est généralement fixé à un mur et un élément capot comprenant, sur sa face extérieure, des prises industrielles. La position fermée du coffret est généralement assurée par l'utilisation de vis de fixation qui permettent de comprimer un joint torique logé entre ces deux éléments pour en assurer l'étanchéité. Des charnières latérales ou des liens souples peuvent également être mis en œuvre pour assurer une liaison mécanique entre l'élément socle et l'élément capot lorsque le coffret est ouvert. Toutefois, il est à noter que certains coffrets actuellement utilisés ne disposent d'aucun élément de liaison permettant d'assurer leur position ouverte. Ainsi pour accéder aux appareils de protection modulaires contenus dans ce coffret, il est nécessaire de retirer intégralement l'élément capot.

Les appareils de protection modulaires sont généralement fixés sur la face intérieure de l'élément socle dans des logements prévus à cet effet et les prises industrielles sont généralement fixées sur la face extérieure de l'élément capot dans des logements prévus à cet effet.

L'élément capot dispose, aussi en partie haute, d'une fenêtre modulaire protégée par un volet transparent étanche. Cette fenêtre permet l'accès aux commandes des appareils de protection modulaires lorsque le volet est en position ouverte.

Les appareils de protection modulaires sont généralement solidaires d'un rail, pouvant par exemple être un rail DIN, qui est lui-même fixé en fond de socle. Les liaisons électriques entre les prises industrielles et leurs appareils de protection modulaires respectifs sont réalisées par le biais de cordons qui peuvent par exemple être des fils électriques souples. Ces derniers sont câblés au préalable sur les prises industrielles avant qu'elles ne soient assemblées sur l'élément capot.

Le raccordement de l'autre extrémité des cordons avec les bornes des appareils de protection modulaires se fait, en règle générale, lorsque ces derniers sont associés au rail situé en fond de socle et en maintenant l'ensemble élément capot / prises industrielles en position ouvert.

Cette opération, réalisée le plus souvent en atelier, encombre le plan de travail car l'élément capot et l'élément socle doivent être rapprochés.

Dans le cas d'un coffret de prises sans liaison mécanique (charnière ou lien souple) entre l'élément socle et l'élément capot lors de leur séparation, les cordons électriques se voient remplir cette fonction. Les connexions électriques subissent des sollicitations mécaniques (traction, torsion). Ce qui est d'autant plus vrai au moment de la fixation murale du coffret en utilisant les points de fixation mis à disposition à l'intérieur de l'élément socle, car l'opération ne peut se faire qu'avec l'élément capot ouvert et donc suspendu.

Dans le cas d'un coffret de prises disposant d'une liaison mécanique entre l'élément socle et l'élément capot, l'opération de fixation murale se fait en manipulant tout le poids de l'ensemble, voire même, avec l'élément capot ouvert, lors de l'utilisation des points de fixation mis à disposition à l'intérieur du socle, ce qui engendre un porte-à-faux considérable et dégrade l'ergonomie de l'opération.

Un inconvénient des boîtes actuellement utilisées réside alors dans le fait qu'il est impossible de préfixer l'élément socle seul sur un mur sans avoir à réaliser d'opération de raccordement électrique entre, par exemple, des prises industrielles et des appareils de protection modulaires. Pour rendre possible cette préfixation, il faudrait que le rail et l'ensemble des appareils de protection modulaires soient solidaires de l'élément capot. Il est également important que le rail équipé des appareils de protection modulaires soit solidaire, après fixation, de l'élément socle de façon à pouvoir réaliser le raccordement de l'alimentation électrique.

Pour surmonter en partie cet inconvénient, un certain nombre de système est actuellement utilisé. Par exemple, des coffrets de prises actuellement utilisés mettent en œuvre un élément capot constitué en deux parties, une partie dont la zone d'appareils de protection modulaires est indépendante et une autre contenant la zone de prises industrielles. Des trous traversant sont aménagés dans l'élément socle pour permettre le cheminement des cordons de liaisons électriques entre les prises industrielles et les appareils de protection modulaires de façon à optimiser l'étanchéité de l'ensemble. Le raccordement entre les appareils de protection modulaires et les prises industrielles, via des cordons, n'est possible que si le rail équipé des appareils de protection modulaires est fixé en fond de l'élément socle. Des plastrons de prises sont équipés de prises et de cordons, puis fixés sur l'élément socle. Ce mode opératoire fonctionne lors d'une mise en œuvre complète de l'élément socle fixé préalablement au mur. Toutefois un problème peut se poser lors de la fixation murale du coffret précâblé en atelier. La partie de l'élément capot qui contient la zone de prises industrielles devra être désolidarisée de l'élément socle si l'on souhaite accéder aux trous de fixation murale de ce dernier et restera suspendue par les cordons.

D'autres systèmes sont bien connus, comme par exemple ceux mettant en jeu des coffrets de prises dans lesquels l'élément capot est monobloc et un système de pivot maintient l'élément capot suspendu verticalement à l'élément socle fixé au mur. Ainsi, les cordons ne subissent pas de sollicitation mécanique. Le raccordement des cordons reliant les bornes des appareils de protection modulaires aux prises industrielles doit s'effectuer lorsque l'élément capot est retiré de l'élément socle et lorsque le rail équipé des appareils de protection modulaires est fixé en fond de l'élément socle.

Encore d'autres systèmes sont connus comme par exemple les coffrets qui disposent de charnières latérales, entre l'élément capot et l'élément socle, et d'un système de rail amovible. Les charnières ne permettent qu'un angle d'ouverture de 90° et sont vissées, rendant l'extraction intégrale de l'élément capot délicate. Notons que la fonction rail amovible offre la possibilité de surélever le rail pour faciliter le passage des câbles dessous, mais n'apporte toutefois pas d'amélioration lors d'un précâblage de l'ensemble en atelier. L'ouverture de l'élément capot limitée à 90° gène les manipulations du rail et ne favorise pas le précâblage, cette gêne étant due à un mauvais équilibre de l'ensemble qui a tendance à se refermer.

Les coffrets Mennekes tels que ceux décrits dans les références brevets DE10112119 et WO2004082089 sont également des solutions connus et emploient des charnières et des rails amovibles similaires à ceux des systèmes BALS. Dans ces coffrets, l'élément capot est relié à l'élément socle par des liens souples de façon à ce qu'il puisse s'articuler verticalement. Le rail est, par l'intermédiaire de deux supports en plastique, vissé dans l'élément socle à l'aide de vis. L'élément capot, de part et d'autre de la fenêtre modulaire, dispose de plots de fixation similaires à ceux réalisés dans l'élément socle pour la fixation du rail et permettent de positionner et fixer le sous ensemble rail / appareils de protection modulaires / support intermédiaire. Cette action permet de réaliser le précâblage complet des cordons reliant les prises industrielles aux bornes des appareils de protection modulaires, sans être encombré par l'élément socle qui peut être détaché de l'élément capot. Par la suite, on doit désolidariser le sous ensemble rail / appareils de protection modulaires de l'élément capot et le refixer dans l'élément socle.

Des dispositifs d'attache pour armoire électrique selon le préambule de la revendication 1 sont connus de EP 0 762 585 A1 et de FR2 211 993 A5.

### Description de l'invention

Il existe donc un réel besoin de fournir des dispositifs et systèmes pour coffret électrique palliant les défauts, inconvénients et obstacles de l'art antérieur et qui permettent notamment de faciliter la mise en œuvre et l'ergonomie du précâblage en atelier sans s'encombrer de l'élément socle. L'intérêt de tels dispositifs et systèmes est aussi de pouvoir, par la suite, fixer l'élément socle au mur seul, sans s'encombrer de l'élément capot précâblé, afin de préparer le cheminement du câble d'alimentation. De cette façon, on pourra, en dernière opération, positionner le sous-ensemble précâblé de l'élément capot sur l'élément socle rapidement sans réaliser de manipulations délicates (connexions entre les appareils de protection modulaires et les prises industrielles, vissage, dévissage).

Pour résoudre un ou plusieurs des inconvénients cités précédemment, le premier objet de l'invention se porte donc sur un dispositif d'attache monobloc pour armoire électrique.

Avec cet objectif en vue, le dispositif selon l'invention est essentiellement caractérisé en ce qu'il comprend :
- une première portion et une seconde portion formant sensiblement un premier plan,
- la première portion comprenant des premiers moyens de clipsage et la seconde portion comprenant des seconds moyens de clipsage, les premiers et seconds moyens de clipsage étant symétriques les uns par rapport aux autres selon un plan perpendiculaire au premier plan, et
- au moins deux moyens de déverrouillage, un premier moyen de déverrouillage comprenant les deuxièmes moyens de clipsage et un deuxième moyen de déverrouillage comprenant les premiers moyens de clipsage, lesdits moyens de déverrouillage étant élastiquement déformables pour déclipser les moyens de clipsage, et
en ce qu'il comprend en outre au moins un moyen de fixation agencé de façon à pouvoir être fixé sur un rail. Le dispositif d'attache selon l'invention est caractérisé en ce que ledit deuxième moyen de déverrouillage est agencé de manière à déclipser lesdits premiers moyens de clipsage suite à sa mise en contact avec ledit premier moyen de déverrouillage après application d'une pression sur ledit premier moyen de déverrouillage.

Ces dispositifs d'attaches monoblocs sont agencés de façon à pouvoir être fixés sur rail amovible, par exemple sur un rail DIN. Contrairement aux dispositifs de l'art antérieur, ces dispositifs d'attaches ne se fixent pas directement dans l'élément socle, mais le sous-ensemble rail / dispositifs d'attaches y est clipsé. Les clips réalisés sur les dispositifs d'attaches monoblocs se verrouillent sans action particulière en fin de positionnement dans leurs logements respectifs façonnés dans un élément, socle et/ou capot. L'action de déverrouillage se fait en agissant manuellement sur au moins un moyen de déverrouillage solidaire de chaque clip.

Ce dispositif d'attache monobloc présente l'avantage, par l'effet de la symétrie des premiers et seconds moyens de clipsage, de pouvoir se clipser dans des logements adéquats d'un réceptacle selon deux sens opposés, c'est-à-dire soit suite à l'introduction de la première portion dans un logement (ou organe de réception) adéquat, soit suite à l'introduction de la seconde portion dans ce même logement (ou organe de réception). Par ailleurs, les moyens de déverrouillage adaptés peuvent être actionnés manuellement ou automatiquement.

Par déverrouillage automatique, au sens de la présente invention, on entend un déverrouillage effectué suite à l'application d'une force sur les moyens de déverrouillage, et vers le dispositif d'attache, de manière à les déformer élastiquement, cette force étant appliqué par un élément solide extérieur.

Par déverrouillage manuel, au sens de la présente invention, on entend un déverrouillage effectué suite à l'application, par un opérateur, d'une force sur les moyens de déverrouillage et vers le dispositif d'attache, de manière à déformer élastiquement les moyens de déverrouillage.

Ce dispositif d'attache monobloc présente ainsi l'avantage de pouvoir se déclipser facilement des logements dans lesquels il a été introduit au préalable, suite à l'actionnement, manuel ou automatique, des moyens de déverrouillage.

Avantageusement, le dispositif d'attache monobloc comprend en outre une gorge suivant une forme particulière adaptée pour la réception d'un rail.

D'une marnière avantageuse, les premiers et seconds moyens de clipsage sont perpendiculaires au premier plan.

Avantageusement, le dispositif d'attache monobloc comprend en outre au moins un premier moyen de guidage en translation adapté pour coopérer avec au moins un second moyen de guidage en translation.

De préférence, les premiers moyens de guidage en translation sont caractérisés par des surfaces prismatiques.

L'invention a également pour objet un boitier électrique qui permet d'améliorer et de faciliter le câblage interne des coffrets de prises industrielles, notamment en phase de raccordement des cordons électriques des prises industrielles aux bornes des appareils de protection modulaires. Le boiter selon l'invention facilite également son installation sur un mur.

En comparaison aux solutions de coffrets de prises sans système de rail amovible, l'invention nécessite l'ajout de pièces intermédiaires que sont les deux dispositifs d'attaches monoblocs et la réalisation de formes supplémentaires dans l'élément socle et l'élément capot pour recevoir et maintenir les dispositifs d'attaches précités.

Ce boitier électrique est donc essentiellement caractérisé en ce qu'il comprend :
- un rail amovible solidaire de deux dispositifs d'attaches monoblocs selon le premier objet de l'invention, chaque dispositif d'attache monobloc étant situé au voisinage de chacune des extrémités du rail amovible,
- un élément capot ayant des organes de réception adaptés pour recevoir les premiers et /ou les seconds moyens de clipsage des dispositifs d'attache monobloc, et
- un élément socle ayant au moins deux logements de réception, chacun d'eux comprenant :
   o une partie inférieure agencée de façon à pouvoir clipser les seconds moyens de clipsage des dispositifs d'attaches monoblocs, et
   o une partie supérieure agencée de façon à pouvoir actionner au moins un moyen de déverrouillage des dispositifs d'attaches monoblocs.

Le rail sur lequel sont fixés les deux dispositifs d'attaches monoblocs peut être positionné dans l'élément capot et clipsé avec les bornes des appareils de protection modulaires accessibles (face avant des modules coté intérieur de l'élément capot) pour réaliser la phase de raccordement des cordons avec les prises industrielles. Toutefois, le rail peut aussi s'assembler avec les appareils de protection modulaires logés dans la fenêtre modulaire de l'élément capot (face arrière des modules coté intérieur de l'élément capot), dans leur position d'utilisation finale, tout en étant maintenu clipsé à l'aide des dispositifs d'attaches monoblocs.

Pour ce faire, les dispositifs d'attaches monoblocs sont conçus avec deux zones clippantes disposées de façon symétrique, l'une est utile pour maintenir le sous-ensemble rail avec les appareils modulaires engagés dans la fenêtre modulaire de l'élément capot et l'autre servant dans un premier temps à maintenir le sous-ensemble rail avec les bornes des appareils modulaires accessibles pour réaliser le raccordement des cordons de prises sur l'élément capot, et par la suite à maintenir dans l'élément socle le même sous-ensemble rail / appareils de protection modulaires.

Cette solution, permet de positionner, sur l'élément socle, l'élément capot précâblé et équipé de son sous-ensemble rail / appareils de protection modulaires / dispositifs d'attaches monoblocs. Au cours du positionnement de l'élément capot sur l'élément socle, les dispositifs d'attaches monoblocs s'introduisent dans les logements de réception de l'élément socle puis les parties supérieures de ces derniers agissent sur au moins un moyen de déverrouillage pour déverrouiller les clips qui servent à maintenir le sous-ensemble rail / appareils de protection modulaires sur l'élément capot. Lorsque l'élément capot est dans sa position finale sur l'élément socle, les clips des dispositifs d'attaches côté de l'élément capot sont déverrouillés et ceux côté de l'élément socle restent actifs. Par la suite l'élément capot peut être ouvert et fermé, les appareils modulaires restent solidaires de l'élément socle et peuvent être raccordés aux câbles d'alimentation secteur.

Avantageusement, le boitier électrique comprend en outre un système de charnière entre l'élément socle et l'élément capot. Un tel système de charnière entre l'élément socle et l'élément capot permet d'éviter de créer des contraintes mécaniques trop importantes dans les cordons électriques.

De manière avantageuse, chaque organe de réception et/ou chaque logement de réception comprennent des seconds moyens de guidage en translation. Ces seconds moyens de guidage en translation sont agencés de façon à pouvoir coopérer avec les premiers moyens de guidage en translation des dispositifs d'attaches monoblocs pour permettre un mouvement relatif de translation.

Avantageusement, les organes de réception de l'élément capot comprennent en outre des moyens de retenu adaptés pour maintenir solidaires les dispositifs d'attaches monobloc et l'élément capot avant l'actionnement des premiers et/ou seconds moyens de déverrouillage.

D'une manière avantageuse, les seconds moyens de déverrouillage, lorsque les dispositifs d'attaches monoblocs se logent dans les logements de réception de l'élément socle, s'actionnent de façon à désolidariser l'élément capot des dispositifs d'attaches monoblocs.

Il est à noter que d'une manière préférentielle, les organes de réception de l'élément capot sont disposés de part et d'autre de la fenêtre modulaire de l'élément capot.

Par ailleurs, les organes de réception de l'élément capot peuvent être similaires aux logements de réception de l'élément socle.

On entend par moyens de clipsage, des moyens permettant d'empêcher de désolidariser le dispositif d'attache monobloc de l'élément socle ou de l'élément capot. Par ailleurs, on entend par moyens de déverrouillage, des moyens pouvant s'activer pour permettre la désolidarisation du dispositif d'attache monobloc de l'élément socle ou de l'élément capot.

### Brève description des figures

L'invention sera mieux comprise à la lecture de la description qui suit, faite uniquement à titre d'exemple, et en référence aux figures en annexe dans lesquelles :
- la figure 1 représente une première vue schématique d'un dispositif d'attache monobloc selon un mode de réalisation de l'invention ;
- la figure 2 représente une seconde vue schématique d'un dispositif d'attache monobloc selon un mode de réalisation de l'invention ;
- la figure 3 représente une vue schématique de l'association entre un dispositif d'attache monobloc selon un mode de réalisation, et un rail ;
- la figure 4 représente une vue schématique de la partie intérieur d'un élément capot dans lequel peut s'introduire un dispositif d'attache monobloc selon un mode de réalisation de l'invention ;
- la figure 5 représente une vue schématique d'un élément capot et d'un rail équipé d'appareils modulaires et comprenant deux dispositifs d'attaches monoblocs avant que ces derniers soient logés dans les organes de réception de l'élément capot ;
- la figure 6 représente une vue schématique d'un sous ensemble rail, dispositifs d'attaches monoblocs, élément capot et d'un élément socle avant leur association,
- la figure 7 représente une vue schématique d'un dispositif d'attache monobloc lorsque les premiers moyens de clipsage sont verrouillés dans les logements de réception d'un élément socle ; et
- la figure 8 représente une vue schématique d'un ensemble élément capot, élément socle, dispositifs d'attaches monoblocs selon un mode de réalisation de l'invention lorsqu'est utilisé un système de charnières.

L'invention a été illustrée et décrite en détail dans les dessins et la description précédente. Celle-ci doit être considérée comme illustrative et donnée à titre d'exemple et non comme limitant l'invention a cette seule description. De nombreuses variantes de réalisation sont possibles.

### Le boitier électrique 10

Le boitier électrique 10 selon un mode de réalisation de l'invention comprend un élément socle 800 et un élément capot 600. Ces deux éléments sont distincts mais de forme complémentaire. Le boitier électrique 10 contient des appareils de protection modulaires 1200 et permet en outre de les protéger.

L'élément capot 600 comprend des organes de réception 620, une fenêtre modulaire 900 à travers laquelle il est possible de visualiser les appareils de protection modulaires 1200 ainsi que des prises industrielles 1000 qui doivent être reliées aux appareils de protection modulaire 1200 appropriés. Les parties fonctionnelles de ces prises industrielles 1000 font saillies à la surface de la face extérieure de l'élément capot 600, et les cordons reliés à chacune de ces parties fonctionnelles ressortent du côté de la face intérieure de l'élément capot 600. En particulier, ces cordons, ou fils électriques, sont reliés aux bornes de connexion 640 situées sur la partie arrière des prises industrielles 1000, cette partie arrière étant située sur la face intérieure de l'élément capot 600.

L'élément socle 800 comprend des logements de réception 820 et des points de fixation 830 lui permettant d'être préfixé sur un mur.

### Ensemble rail amovible 200 / appareils de protection modulaires 1200 / dispositifs d'attaches monoblocs 400

Les appareils de protection modulaires 1200 sont disposés sur un rail amovible 200 qui peut être par exemple un rail DIN. Ce rail amovible 200 possède des dimensions lui permettant de s'intégrer intégralement dans l'élément capot 600 ou dans l'élément de socle 800.

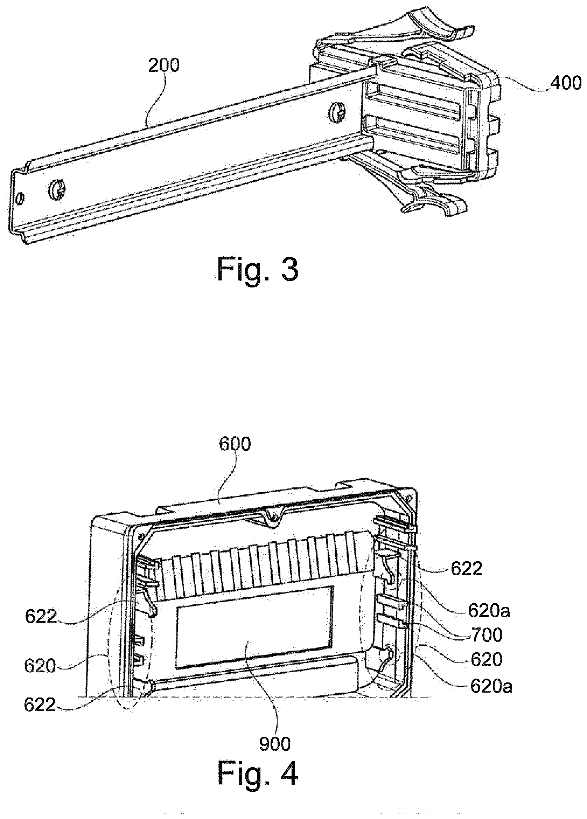

Ce rail amovible 200 est solidaire de deux dispositifs d'attaches monoblocs 400. Chaque dispositif d'attache monobloc 400 est situé au voisinage de chacune des extrémités du rail amovible 200 et est fixé à ce dernier par tout élément ou produit connu de l'homme du métier (voir figure 3). Par exemple, pour cette fixation, il est possible d'utiliser une vis, de la colle, un clip, un sertissage ou encore un rivet.

Ainsi, le dispositif d'attache monobloc 400 de l'invention comprend au moins un moyen de fixation 410 agencé et adapté de façon à pouvoir être solidaire du rail amovible 200.

### Le dispositif d'attache monobloc 400

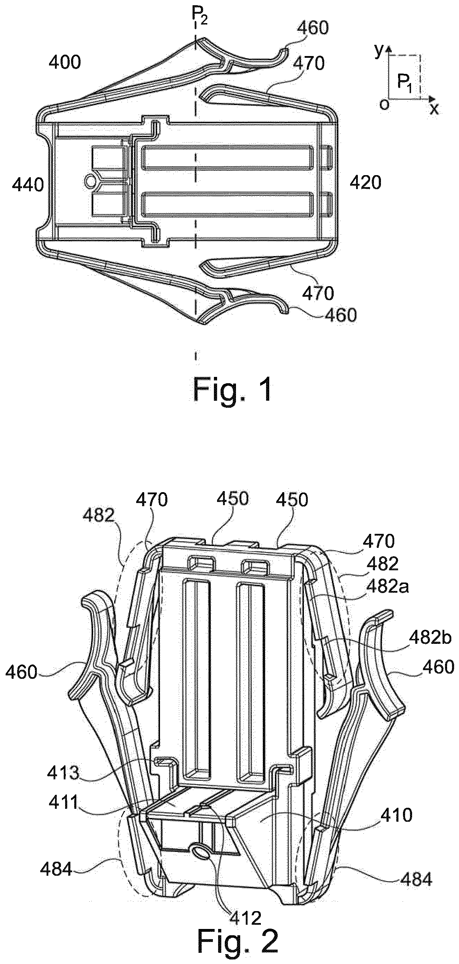

Le dispositif d'attache monobloc 400 selon une mode de réalisation particulier de l'invention est représenté sur les figure 1 et 2. Il est constitué d'un unique bloc et comprend deux portions 420 et 440 distinctes formant un premier plan P1.

Un tel dispositif d'attache monobloc 400 peut être réalisé en matière plastique tel qu'en polystyrène choc ou polyamide chargé ou non, ou encore en polycarbonate comprenant des charges vitreuses ou non. Par ailleurs, il peut également être réalisé en métal.

La première portion 420 comprend des premiers moyens de clipsage 482. Ces premiers moyens de clipsage 482 sont agencés de façon à pouvoir coopérer avec des moyens de retenu 620a d'un organe de réception 620 d'un élément capot 600. Plus particulièrement, ces premiers moyens de clipsage 482 comprennent une partie protubérante 482a et une cavité 482b.

Ainsi, lorsque la première portion 420 est correctement introduite dans un organe de réception 620, la partie protubérante 482a des premiers moyens de clipsage 482 coopèrent avec les moyens de retenu 620a de l'organe de réception 620 pour clipser le dispositif d'attache monobloc 400 dans l'organe de réception 620. Ces moyens de retenu 620a sont aptes à se mettre en contact avec la partie protubérante 482a et à maintenir le dispositif d'attache monobloc 400 dans l'organe de réception 620 de l'élément capot 600 pour assurer la fixation du dispositif d'attache monobloc 400 dans l'élément capot 600.

En particulier, comme illustré sur la figure 4, chaque organe de réception 620 de l'élément capot 600 délimite un espace de logement du dispositif d'attache monobloc 400 par la présence de deux protubérances 622 s'étendant transversalement depuis la paroi de l'élément capot 600 et distantes l'une de l'autre. Chacune de ces protubérances 622 porte les moyens de retenu 620a et comprennent des surface de guidage. Ces moyens de retenu 620a peuvent être des pattes de clipsage, ou des crochets, venues de matière, en saillie par rapport à la face interne de chacune de ces protubérances 622 et adaptées pour coopérer avec les premiers et seconds moyens de clipsage 482 et 484.

Ainsi, dès lors que la première ou la seconde portion, 420 ou 440, du dispositif monobloc d'attache 400 sont introduites dans l'organe de réception 620, les premiers ou seconds moyens de clipsage, 482 ou 484, coopèrent avec les moyens de retenu 620a pour maintenir le dispositif d'attache monobloc 400 dans l'organe de réception 620.

Le dispositif d'attache monobloc 400 de la figure 1, comprend deux premiers et deux second moyens de déverrouillage 460 et 470, les premiers moyens de déverrouillage 460 contenant les deuxième moyens de clipsage 484 et les deuxièmes moyens de déverrouillage 470 contenant les premiers moyens de clipsage 482. Il est à noter que ces moyens de déverrouillage 460 et 470 sont élastiquement déformables afin de permettre le clipsage des premiers et seconds moyens de clipsage, 482 et 484, lorsqu'aucune pression n'est appliquée sur ces moyens de déverrouillage, 460 et 470, et de façon à permettre leur déclipsage lorsqu'une pression y est appliquée. Par ailleurs, le dispositif d'attache monobloc 400 est rigide pour maintenir les barreaux ou les rails auxquels ils sont fixés.

. Ainsi, lorsque l'on souhaite déclipser le dispositif d'attache monobloc 400 de l'organe de réception 620, on doit activer des seconds moyens de déverrouillage 470, en appliquant une pression sur les premiers moyens de déverrouillage 460 qui peuvent par exemple avoir une forme adaptée à la réception d'un doigt d'un opérateur. En appliquant cette pression sur les premiers moyens de déverrouillage 460, on peut donc activer les seconds moyens de déverrouillage 470 et ainsi déloger les premiers moyens de clipsage 482 des moyens de retenu 620a. Cette activation peut être réalisée soit par un opérateur, en appliquant une force sur les premiers moyens de déverrouillage 460, soit par un quelconque élément capable d'appliquer une pression soit sur ces premiers moyens de déverrouillage 460, soit directement sur les seconds moyens de déverrouillage 470.

Comme indiqué sur la figure 2 notamment, les deuxièmes moyens de déverrouillage 470 sont plus courts que les premiers moyens de déverrouillage 460 de façon à ce que ces deuxièmes moyens de déverrouillage 470 puissent se trouver derrière les premiers moyens de déverrouillage 460, autrement dit pour qu'ils puissent se trouver entre le corps du dispositif d'attache et les premiers moyens de déverrouillage 460. Ainsi, pour déclipser les premiers et/ou deuxièmes moyens de clipsage 482, 484, il est suffisant de n'appliquer une force que sur les premiers moyens de déverrouillage 460. En effet, l'actionnement des premiers moyens de déverrouillage 460 entraine l'actionnement des deuxièmes moyens de déverrouillage 470.

La seconde portion 440 comprend des seconds moyens de clipsage 484. Ces seconds moyens de clipsage 484 sont agencés de façon à pouvoir coopérer avec un logement de réception 820 et/ou un organe de réception 620. Pour déclipser ces seconds moyens de clipsage 484, comme le principe précédemment décrit, il est nécessaire d'appliquer une pression sur les premiers moyens de déverrouillage 460. Il est à noter que ces seconds moyens de clipsage 484 sont agencés de façon à pouvoir s'introduire soit dans un organe de réception 620 d'un élément capot, soit dans un logement de réception 820 d'un élément socle 800. Ainsi, en appliquant une pression sur les moyens de déverrouillage 460, on peut soit retirer les seconds moyens de clipsage 484 des organes de réception 620, soit retirer les seconds moyens de clipsage 484 des logements de réception 820 de l'élément socle 800.

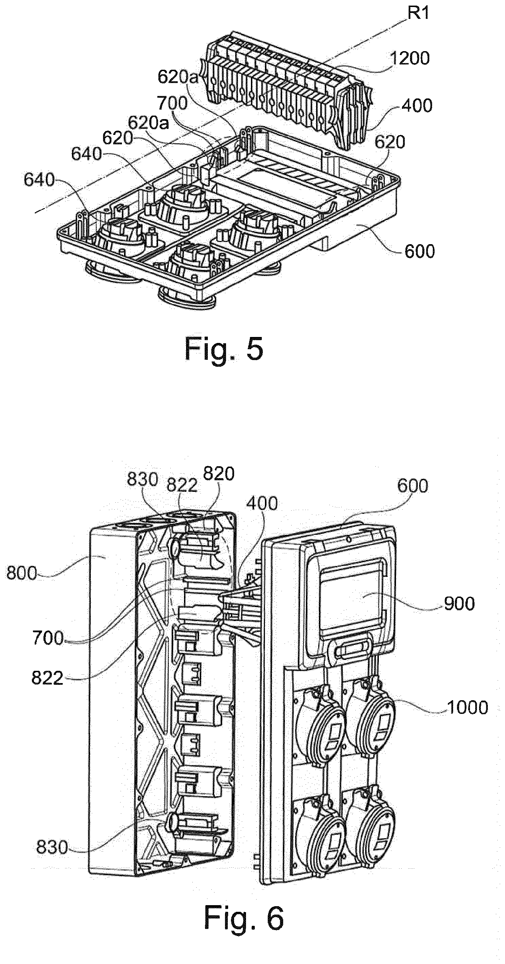

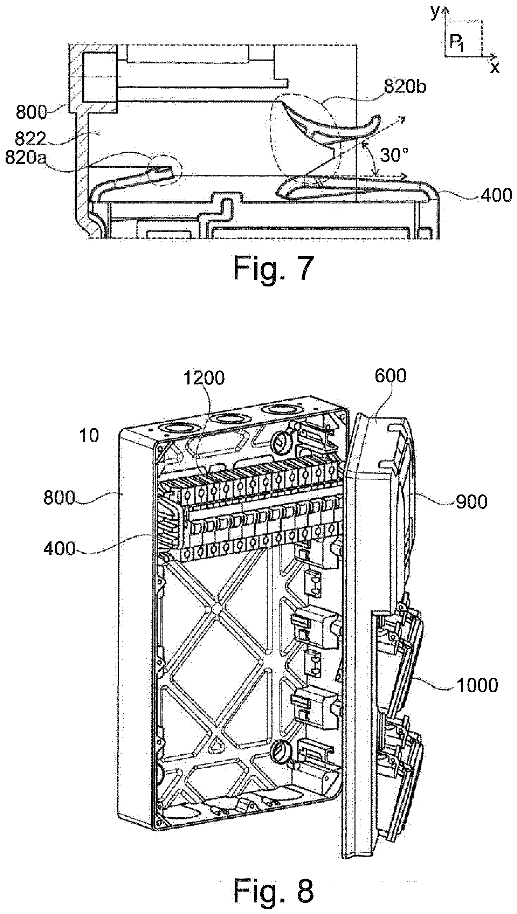

Il est à noter que, selon l'invention, chaque logement de réception 820 de l'élément socle 800 comprend deux excroissances 822. En particulier, comme illustré sur les figures 6 et 7, chaque logement de réception 820 de l'élément socle 800 délimite un espace de logement du dispositif d'attache monobloc 400 par la présence des deux excroissances 822 s'étendant transversalement depuis la paroi de l'élément socle 800, distantes l'une de l'autre, et comprennent des surface de guidage. Chacune de ces excroissances 822 comprend une partie inférieure 820a et une partie supérieure 820b. La partie inférieure 820a est agencée de façon à pouvoir clipser les seconds moyens de clipsage 484 des dispositifs d'attaches monoblocs 400, et la partie supérieure 820b est agencée de façon à pouvoir actionner au moins un moyen de déverrouillage, 460 et/ou 470, des dispositifs d'attache monoblocs 400.

En particulier, la partie 820a porte une proéminence adaptée pour clipser les seconds moyens de clipsage 484. La partie 820b porte un chanfrein dont son angle de laminage est de 30° par rapport à l'axe des x du plan P1 du dispositif d'attache monobloc 400 (voir figure 7) agencé de sorte à actionner les seconds moyens de déverrouillage 470 lorsque l'on introduit la seconde portion 440 du dispositif d'attache monobloc 400 dans le logement de réception 820 de l'élément socle 800.

De cette façon, dès lors que l'on introduit la seconde portion 440 du dispositif d'attache monobloc 400 dans un logement de réception 820 de l'élément socle 800, une pression est appliquée sur les seconds moyens de déverrouillage 470 conduisant à son activation et le cas échéant au déclipsage des premiers moyens de clipsage 482 afin de déloger les premiers moyen de clipsage 482 des moyens de retenu 620a de l'élément capot 600.

Il est à noter que les premiers moyens de clipsage 482 sont symétriques aux seconds moyens de clipsage 484 selon un plan de symétrie P2 perpendiculaire au premier plan P1. De cette façon, les seconds moyens de clipsage 484 de la seconde portion 440 peuvent s'introduire soit dans un logement de réception 820 de l'élément socle 800, soit dans un organe de réception 620 de l'élément capot 600 et peuvent y être clipser.

Les premiers et seconds moyens de clipsage, 482 et 484, d'un dispositif d'attache 400 de l'invention peuvent, de préférence, être perpendiculaires au premier plan P1. De cette façon, le dispositif d'attache 400 sera correctement maintenu dans les organes et/ou logements de réception 620, 820, par les moyens de retenu 620a et/ou les parties inférieures 820a des logements de réception 820.

Dans un mode préférentiel de l'invention, le dispositif d'attache monobloc de l'invention peut en outre comprendre au moins un premier moyen de guidage en translation 450 adapté pour coopérer avec au moins un second moyen de guidage en translation 700 qui complète chaque logement et organe de réception 620, 820. De tels moyens de guidage en translation, 450 et 700, permettent de faciliter l'introduction des dispositifs d'attaches monoblocs 400 dans les logements et organes de réception 620, 820.

En particulier, de tels moyens de guidage en translation, 450 et 700, permettent la réalisation d'une liaison glissière entre les dispositifs d'attaches monoblocs 400 et les éléments capot et socle, 600 et 800. Ces moyens de guidage, 450 et 700, permettent notamment de positionner correctement l'élément capot 600 par rapport à l'élément socle 800 pour notamment faciliter la mise en place du boitier électrique 10.

Dans un mode préférentiel de réalisation, les premiers moyens de guidage en translation 450 sont caractérisés par des surfaces prismatiques et agencés de façon à pouvoir coopérer avec les seconds moyens de guidage en translation 700 pour faciliter un mouvement relatif de translation. De préférence, les seconds moyens de guidage en translation 700 ont une forme complémentaire des premiers moyens de guidage en translation 450 de façon à ce que les premiers moyens de guidage en translation 450 puissent s'introduire dans les seconds moyens de guidage en translation 700. Ainsi, lors de l'introduction des dispositifs d'attaches monoblocs 400 dans les logements ou organes de réception, 620 et 820, à l'aide des surfaces prismatiques, les dispositifs d'attaches monoblocs 400 sont en contact directs avec les seconds moyens de guidage en translation 700.

De cette façon, l'introduction du dispositif d'attache monobloc 400 dans un organe et/ou un logement de réception 620 et/ou 820 est facilitée et fluide.

Le moyen de fixation 410 du dispositif d'attache monobloc 400 comprend un plateau 411 venant supporter un rail amovible 200 lorsque le dispositif d'attache monobloc 400 est solidaire de ce dernier, et un trou de fixation 412 qui traverse le moyen de fixation 410 et qui est agencé de façon à ce qu'un élément de fixation puisse s'y introduire pour solidariser un rail amovible 200 avec le dispositif d'attache monobloc 400. Par exemple, le trou de fixation 412, qui est un trou traversant, peut avoir une forme circulaire et traverser le moyen de fixation 410 en passant par le plateau 411.

Au niveau du plateau 411, le dispositif d'attache monobloc 400 comprend en outre une gorge 413 dessinant une forme particulière dans laquelle peut venir s'emboiter un rail amovible 200. Cette forme particulière se caractérise par un enlèvement de matière non traversant dessinant une forme prédéfinie et fonction de la tranche du rail amovible 200 sur lequel doit se fixer le dispositif d'attache monobloc 400. De cette façon, les extrémités d'un rail amovible 200 viennent en butée sur le fond des gorges 413 des dispositifs d'attache monobloc 400 pour garantir leur fixation sur un rail amovible 200. Cette gorge 413 permet donc un meilleur maintient mécanique de chaque dispositif d'attache monobloc 400 avec un rail amovible 200 et permet d'éviter toute rotation du rail amovible 200 par rapport au dispositif d'attache monobloc 400.

### Mise en place du boitier électrique 10

Avec de tels dispositifs d'attaches monoblocs 400, il est donc aisé de composer le boitier électrique 10 et notamment de raccorder les cordons de chacune des prises industrielles 1000 à chaque appareil de protection modulaire 1200 qui lui est dédié.

En effet, à l'aide de l'utilisation de dispositifs d'attaches monobloc 400 selon l'invention, ce boitier électrique 10 peut facilement être fixé au mur et les cordons des prises industrielle 1000 peuvent facilement être relié à chaque appareil de protection modulaire 1200.

Pour mettre en place ce boitier électrique 10, il est à noter qu'il est possible, tout d'abord, de fixer l'élément socle 800 au mur. Ensuite, après avoir fixé les dispositifs d'attaches monoblocs 400 sur le rail amovible 200 on dispose les appareils de protection modulaires 1200 sur le rail amovible 200, de façon à avoir un ensemble appareils de protection modulaires 1200 / rail amovible 200 / deux dispositifs d'attaches monoblocs 400.

Alors, on peut mettre en place cet ensemble, via les dispositifs d'attaches monobloc 400, dans les organes de réception 620 de l'élément capot 600. L'élément capot 600 comprend, sur sa face avant :
- une fenêtre modulaire 900 à travers laquelle l'opérateur peut visualiser les appareils de protection modulaires 1200, et
- des prises industrielles 1000.
Et la face arrière de l'élément capot comprend :
- deux organes de réception 620 adaptés pour recevoir les premiers et seconds moyens de clipsage 482, 484 des premières et deuxièmes portions 420, 440 des dispositifs d'attaches monoblocs 400, chaque organe de réception 620 comprenant, de préférence, des moyens de retenu 620a et des seconds moyens de guidage en translation 700, et
- des cordons reliés aux prises industrielles 1000 de sa face avant.

Il est à noter que ces organes de réception 620 sont disposés de part et d'autre de la fenêtre modulaire 900 (voir figures 4 et 5).

Dans un premier temps, avant de raccorder les cordons des prises industrielles 1000 à chaque appareil de protection modulaire 1200, on insère les secondes portions 440 des dispositifs d'attaches monoblocs 400 dans les organes de réception 620. De cette façon, l'ensemble appareils de protection modulaires 1200 / rail amovible 200 / deux dispositifs d'attaches monoblocs 400 est retenu par les moyens de retenu 620a des organes de réception 620.

Une fois les raccordements électriques effectués, l'ensemble appareils de protection modulaires 1200 / rail amovible 200 / deux dispositifs d'attaches monoblocs 400 est extrait des organes de réception 620 par l'opérateur suite à l'application d'une pression sur les premiers moyens de déverrouillage 460. Cette pression permet de déclipser les seconds moyens de clipsage 484 des moyens de retenu 620a.

Ensuite, un opérateur peut repositionner l'ensemble appareils de protection modulaires 1200 / rail amovible 200 / deux dispositifs d'attaches monoblocs 400 dans la fenêtre modulaire 900 de façon à ce que les faces fonctionnelles des appareils de protection modulaires 1200 soient visibles à travers la fenêtre modulaire 900. Pour ce faire, après extraction des dispositifs d'attaches monoblocs 400 des organes de réception 620, on effectue une rotation de 180°, par rapport à l'axe de rotation R1, de l'ensemble appareils de protection modulaires 1200 / rail amovible 200 / deux dispositifs d'attaches monoblocs 400, au moins une partie des appareils de protection modulaires 1200 de cet ensemble étant notamment reliée aux bornes de connexion 640 de prises industrielles 1000 appropriées et définies au préalable.

Ensuite, on introduit les premières portions 420 des dispositifs d'attaches monoblocs 400 dans les organes de réception 620 de l'élément capot 600. Ainsi, les premiers moyens de clipsage 482 se clipsent dans les organes de réception 620 via les moyens de retenu 620a. On a donc un ensemble appareils de protection modulaires 1200 / rail amovible 200 / deux dispositifs d'attaches monoblocs 400 / élément capot 600.

Une fois cet ensemble obtenu, les faces avant des appareils de protection modulaires 1200 sont bien visibles à travers la fenêtre modulaire 900 de l'élément capot 600. L'élément capot 600 est alors précâblé. L'opérateur peut introduire les secondes portions 440 des dispositifs d'attaches monobloc 400 de l'ensemble appareils de protection modulaires 1200 / rail amovible 200 / deux dispositifs d'attaches monoblocs 400 / élément capot 600 dans les logements de réception 820 de l'élément socle 800 (voir figure 6).

Lorsque les secondes portions 440 des dispositifs d'attaches monobloc 400 de l'ensemble appareils de protection modulaires 1200 / rail amovible 200 / deux dispositifs d'attaches monoblocs 400 / élément capot 600 entrent en contact avec les logements de réception 820 de l'élément socle 800, les seconds moyens de clipsage 484 des secondes portions 440 des dispositifs d'attaches monoblocs 400 se clipsent dans les parties inférieures 820a des logements de réception 820. Sensiblement simultanément à ces clipsages, les parties supérieures 820b des logements de réception 820 de l'élément socle 800 agissent sur les seconds moyens de déverrouillages 470 des dispositifs d'attaches monoblocs (voir figure 7). De préférence, les premiers moyens de clipsage 482 se déclipsent avant que les seconds moyens de clipsage 484 ne se clipsent. Ainsi, lorsque l'on introduit les secondes portions 440 des dispositifs d'attaches monoblocs 400 dans l'élément socle 800, les premiers moyens de clipsage 482 se déclipsent pour désolidariser l'élément capot 600 de l'ensemble appareils de protection modulaires 1200 / rail amovible 200 / deux dispositifs d'attaches monoblocs 400. Ainsi, on obtient un ensemble appareils de protection modulaires 1200 / rail amovible 200 / deux dispositifs d'attaches monoblocs 400 / élément socle 800, l'élément capot n'étant relié à l'ensemble précité que par les cordons reliant les prises industrielles 1000 et les appareils de protection modulaires 1200.

De cette façon, les seconds moyens de clipsage 484 servent au maintien de l'ensemble appareils de protection modulaires 1200 / rail amovible 200 / deux dispositifs d'attaches monoblocs 400 dans l'élément socle 800, et restent contraints de façon permanente (voir figure 8).

Toutefois, de préférence, un système de charnière peut permettre de relier l'élément socle 800 à l'élément capot 600 après câblage et formation de l'ensemble appareils de protection modulaires 1200 / rail amovible 200 / deux dispositifs d'attaches monoblocs 400 / élément capot 600.

Et pour désolidariser l'ensemble appareils de protection modulaires 1200 / rail amovible 200 / deux dispositifs d'attaches monoblocs 400 de l'élément socle 800, l'opérateur applique une pression sur les premiers moyens de déverrouillage 460 pour déclipser les seconds moyens de clipsage 484 des parties inférieures 820a des logements de réception 820.

Dans les revendications, le mot « comprenant » n'exclue pas d'autres éléments et l'article indéfini « un/une » n'exclue pas une pluralité.

### LISTES DES REFERENCES

Les différents signes de références inscrits dans les figures se rapportent aux termes ci-après : 10 boitier électrique, 200 rail amovible, 400 dispositif d'attache monobloc, 410 moyen de fixation, 411 plateau, 412 trou de fixation, 413 gorge, 420 première portion, 440 seconde portion, 450 premier moyen de guidage en translation, 460 premier moyen de déverrouillage, 470 second moyen de déverrouillage, 482 premiers moyens de clipsage, 482a partie protubérante, 482b cavité, 484 seconds moyens de clipsage, 600 élément capot, 620 organes de réception, 620a moyens de retenue, 622 protubérances, 640 borne de connexion, 700 second moyen de guidage en translation, 800 élément socle, 820 logement de réception, 820a partie inférieure, 820b partie supérieure, 822 excroissances, 900 fenêtre modulaire, 1000 prise industrielle, 1200 appareil de protection modulaire, P1 premier plan, P2 plan de symétrie, R1 axe de rotation.

## Revendications

1. Dispositif d'attache monobloc (400) pour armoire électrique permettant de fixer un rail comprenant des appareils de protection modulaires à un élément socle, le dispositif comprenant:
- une première portion (420) et une seconde portion (440) formant sensiblement un premier plan (P1),
- la première portion (420) comprenant des premiers moyens de clipsage (482) et la seconde portion (440) comprenant des seconds moyens de clipsage (484), les premiers et seconds moyens de clipsage (482, 484) étant symétriques les uns par rapport aux autres selon un plan perpendiculaire au premier plan (P1), et
- au moins deux moyens de déverrouillage (460,470), un premier moyen de déverrouillage (460) comprenant les deuxièmes moyens de clipsage (484) et un deuxième moyen de déverrouillage (470) comprenant les premiers moyens de clipsage (482), lesdits moyens de déverrouillage étant élastiquement déformables pour déclipser les moyens de clipsage (482, 484), le dispositif monobloc comprenant en outre au moins un moyen de fixation (410) agencé de façon à pouvoir être fixé sur un rail, le dispositif monobloc étant **caractérisé en ce que** ledit deuxième moyen de déverrouillage (470) est agencé de manière à déclipser lesdits premiers moyens de clipsage (482) suite à sa mise en contact avec ledit premier moyen de déverrouillage (460) après application d'une pression sur ledit premier moyen de déverrouillage (460).

2. Dispositif d'attache monobloc (400) selon la revendication 1, **caractérisé en ce qu'**il comprend en outre une gorge (413) suivant une forme particulière adaptée pour la réception d'un rail.

3. Dispositif d'attache monobloc (400) selon les revendications 1 ou 2, caractérisé en que les premiers et seconds moyens de clipsage (482, 484) sont perpendiculaires au premier plan (P1).

4. Dispositif d'attache monobloc (400) selon l'une quelconque des revendications 1 à 3, caractérisé en qu'il comprend en outre au moins un premier moyen de guidage en translation (450) adapté pour coopérer avec au moins un second moyen de guidage en translation (700).

5. Dispositif d'attache monobloc (400) selon la revendication 4, dans lequel les premiers moyens de guidage en translation (450) sont **caractérisés par** des surfaces prismatiques.

6. Boitier électrique (10) **caractérisé en ce qu'**il comprend :
- un rail amovible (200) solidaire de deux dispositifs d'attaches monoblocs (400) selon l'une quelconque des revendications 1 à 5, chaque dispositif d'attache monobloc (400) étant situé au voisinage de chacune des extrémités du rail amovible (200),
- un élément capot (600) ayant des organes de réception (620) adaptés pour recevoir les premiers et /ou les seconds moyens de clipsage (482, 484) des dispositifs d'attache monobloc (400), et
- un élément socle (800) ayant au moins deux logements de réception (820), chacun d'eux comprenant :
o une partie inférieure (820a) agencée de façon à pouvoir clipser les seconds moyens de clipsage (484) des dispositifs d'attaches monoblocs (400), et
o une partie supérieure (820b) agencée de façon à pouvoir actionner au moins un moyen de déverrouillage (460, 470) des dispositifs d'attaches monoblocs (400).

7. Boitier électrique (10) selon la revendication 6, **caractérisé en ce qu'**il comprend en outre un système de charnière entre l'élément socle (800) et l'élément capot (600).

8. Boitier électrique (10) selon la revendication 6 ou 7, **caractérisé en ce que** chaque organe de réception (620) et/ou chaque logement de réception (820) comprennent des seconds moyens de guidage en translation (700).

9. Boitier électrique (10) selon l'une quelconque des revendications 6 à 8, **caractérisé en ce que** les organes de réception (620) de l'élément capot (600) comprennent en outre des moyens de retenu (620a) adaptés pour maintenir solidaires les dispositifs d'attaches monobloc (400) et l'élément capot (600) avant l'actionnement des premiers et/ou seconds moyens de déverrouillage (460, 470).

10. Boitier électrique (10) selon l'une quelconque des revendications 6 à 9, **caractérisé en ce que** les seconds moyens de déverrouillage (470), lorsque les dispositifs d'attaches monoblocs (400) se logent dans les logements de réception (820) de l'élément socle (800), s'actionnent de façon à désolidariser l'élément capot (600) des dispositifs d'attaches monoblocs (400).

## Patentansprüche

1. Monoblock-Anschlussvorrichtung (400) für Schaltschrank, das Befestigen einer modulare Schutzvorrichtungen umfassenden Schiene an einem Sockelelement ermöglichend, wobei die Vorrichtung Folgendes umfasst:
- einen ersten Abschnitt (420) und einen zweiten Abschnitt (440), im Wesentlichen eine erste Ebene (P1) bildend,
- wobei der erste Abschnitt (420) erste Klemmmittel (482) und der zweite Abschnitt (440) zweite Klemmmittel (484) umfasst, wobei die ersten und zweiten Klemmmittel (482, 484) zueinander symmetrisch sind gemäß einer zu der ersten Ebene (P1) senkrechten Ebene, und
- wenigstens zwei Entriegelungsmittel (460, 470), wobei ein erstes Entriegelungsmittel (460) die zweiten Klemmmittel (484) umfasst und ein zweites Entriegelungsmittel (470) die ersten Klemmmittel (482) umfasst, wobei die Entriegelungsmittel elastisch verformbar sind, um die Klemmmittel (482, 484) zu entklemmen, wobei die Monoblock-Vorrichtung weiter wenigstens ein Befestigungsmittel (410) umfasst, solcherart ausgelegt, dass es auf einer Schiene befestigt werden kann, wobei die Monoblock-Vorrichtung **dadurch gekennzeichnet ist, dass** das zweite Entriegelungsmittel (470) solcherart ausgelegt ist, dass es die ersten Klemmmittel (482) nach seinem Inkontakttreten mit dem ersten Entriegelungsmittel (460) nach Anwendung eines Drucks auf das erste Entriegelungsmittel (460) entklemmt.

2. Monoblock-Anschlussvorrichtung (400) nach Anspruch 1, **dadurch gekennzeichnet, dass** sie weiter einen Schlund (413) gemäß einer besonderen, für die Rezeption einer Schiene angepassten Form umfasst.

3. Monoblock-Anschlussvorrichtung (400) nach Anspruch 1 oder 2, **dadurch gekennzeichnet, dass** die ersten und zweiten Klemmmittel (482, 484) senkrecht zu der ersten Ebene (P1) sind.

4. Monoblock-Anschlussvorrichtung (400) nach einem der Ansprüche 1 bis 3, **dadurch gekennzeichnet, dass** sie weiter wenigstens ein erstes translatorisches Führungsmittel (450) umfasst, angepasst, um mit wenigstens einem zweiten translatorischen Führungsmittel (700) zu kooperieren.

5. Monoblock-Anschlussvorrichtung (400) nach Anspruch 4, in welcher die ersten translatorischen Führungsmittel (450) durch prismatische Oberflächen gekennzeichnet sind.

6. Schaltschrank (10), **dadurch gekennzeichnet, dass** er Folgendes umfasst:
- eine abnehmbare Schiene (200), solidarisch mit zwei Monoblock-Anschlussvorrichtungen (400) nach einem der Ansprüche 1 bis 5, wobei jede Monoblock-Anschlussvorrichtung (400) in der Nachbarschaft jeder der Extremitäten der abnehmbaren Schiene (200) situiert ist,
- ein Abdeckelement (600), Aufnahmeorgane (620) aufweisend, angepasst, um die ersten und/oder zweiten Klemmmittel (482, 484) der Monoblock-Anschlussvorrichtungen (400) aufzunehmen, und
- ein Sockelelement (800), wenigstens zwei Rezeptionsaufnahmen (820) aufweisend, jeweils Folgendes umfassend:
• einen unteren Teil (820a), ausgelegt, um die zweiten Klemmmittel (484) der Monoblock-Anschlussvorrichtungen (400) klemmen zu können, und
• einen oberen Teil (820b), ausgelegt, um wenigstens ein Entriegelungsmittel (460, 470) der Monoblock-Anschlussvorrichtungen (400) betätigen zu können.

7. Schaltschrank (10) nach Anspruch 6, **dadurch gekennzeichnet, dass** er weiter ein Scharniersystem zwischen dem Sockelelement (800) und dem Abdeckelement (600) umfasst.

8. Schaltschrank (10) nach Anspruch 6 oder 7, **dadurch gekennzeichnet, dass** jedes Rezeptionsorgan (620) und/oder jede Rezeptionsaufnahme (820) zweite translatorische Führungsmittel (700) umfasst.

9. Schaltschrank (10) nach einem der Ansprüche 6 bis 8, **dadurch gekennzeichnet, dass** die Rezeptionsorgane (620) des Abdeckelements (600) weiter Rückhaltemittel (620a) umfassen, angepasst, um die Monoblock-Anschlussvorrichtungen (400) und das Abdeckelement (600) vor der Betätigung der ersten und/oder zweiten Entriegelungsmittel (460, 470) solidarisch zu halten.

10. Schaltschrank (10) nach einem der Ansprüche 6 bis 9, **dadurch gekennzeichnet, dass** die zweiten Entriegelungsmittel (470), wenn die Monoblock-Anschlussvorrichtungen (400) in den Rezeptionsaufnahmen (820) des Sockelelements (800) aufgenommen werden, solcherart betätigt werden, dass das Abdeckelement (600) von den Monoblock-Anschlussvorrichtungen (400) desolidarisiert wird.

## Claims

1. A one-piece fastening device (400) for electrical cabinet for fixing a rail comprising modular protective apparatuses to a base element, the device comprising:
- a first portion (420) and a second portion (440) substantially forming a first plane (PI),
- the first portion (420) comprising first clipping means (482) and the second portion (440) comprising second clipping means (484), the first and second clipping means (482, 484) being symmetrical relative to each other along a plane perpendicular to the first plane (PI), and
- at least two unlocking means (460, 470), a first unlocking means (460) comprising the second clipping means (484) and a second unlocking means (470) comprising the first clipping means (482), said unlocking means being elastically deformable to unclip the clipping means (482, 484), the one-piece device further comprising at least one fixing means (410) arranged so as to be able to be fixed on a rail, the one-piece device being **characterised in that** said second unlocking means (470) is arranged so as to unclip said first clipping means (482) after being brought into contact with said first unlocking means (460) after applying a pressure on said first unlocking means (460).

2. The one-piece fastening device (400) according to claim 1, **characterised in that** it further comprises a groove (413) in a particular shape adapted for receiving a rail.

3. The one-piece fastening device (400) according to claims 1 or 2, **characterised in that** the first and second clipping means (482, 484) are perpendicular to the first plane (P1).

4. The one-piece fastening device (400) according to any one of claims 1 to 3, **characterised in that** it further comprises at least one first translational guide means (450) adapted to cooperate with at least one second translational guide means (700).

5. The one-piece fastening device (400) according to claim 4, wherein the first translational guide means (450) are **characterised by** prismatic surfaces.

6. An electrical box (10) **characterised in that** it comprises:
- a removable rail (200) integral with two one-piece fastening devices (400) according to any one of claims 1 to 5, each one-piece fastening device (400) being located in the vicinity of each of the ends of the removable rail (200),
- a cover element (600) having receiving members (620) adapted to receive the first and/or second clipping means (482, 484) of the one-piece fastening devices (400), and
- a base element (800) having at least two receiving housings (820), each of them comprising:
• a lower part (820a) arranged so as to be able to clip the second clipping means (484) of the one-piece fastening devices (400), and
• an upper part (820b) arranged so as to be able to actuate at least one unlocking means (460, 470) of the one-piece fastening devices (400).

7. The electrical box (10) according to claim 6, **characterised in that** it further comprises a hinge system between the base element (800) and the cover element (600) .

8. The electrical box (10) according to claim 6 or 7, **characterised in that** each receiving member (620) and/or each receiving housing (820) comprise second translational guide means (700).

9. The electrical box (10) according to any one of claims 6 to 8, **characterised in that** the receiving members (620) of the cover element (600) further comprise retaining means (620a) adapted to maintain the one-piece fastening devices (400) and the cover element (600) integral with each other before the actuation of the first and/or second unlocking means (460, 470).

10. The electrical box (10) according to any one of claims 6 to 9, **characterised in that** the second unlocking means (470), when the one-piece fastening devices (400) are housed in the receiving housings (820) of the base element (800), are actuated so as to separate the cover element (600) from the one-piece fastening devices (400).
